# EUROPÄISCHE PATENTSCHRIFT

(11) **EP 4 536 892 B1**
(45) Veröffentlichungstag und Bekanntmachung des Hinweises auf die Patenterteilung: **08.07.2026**
(21) Anmeldenummer: 23726288.6
(22) Anmeldetag: 05.05.2023
(51) Int. Cl.: D21F 7/00, D21G 1/02, F16N 7/40, F16N 29/00, F16N 39/02

(54) **ANLAGE UND VERFAHREN ZUR VERSORGUNG EINER SCHMIERSTELLE MIT SCHMIERÖL**
SYSTEM AND METHOD FOR SUPPLYING A LUBRICATION POINT WITH LUBRICATING OIL
SYSTÈME ET PROCÉDÉ D'ALIMENTATION EN HUILE DE GRAISSAGE D'UN POINT DE GRAISSAGE

(30) Priorität: 08.06.2022 DE 102022114408
(43) Veröffentlichungstag der Anmeldung: 16.04.2025
(73) Patentinhaber: Voith Patent GmbH, 89522 Heidenheim (DE)
(72) Erfinder: JIPP, Christopher, 89522 Heidenheim (DE)
(74) Vertreter: Voith Patent GmbH - Patentabteilung
(86) Internationale Anmeldenummer: PCT/EP2023/061891
(87) Internationale Veröffentlichungsnummer: WO 2023/237267

(56) Entgegenhaltungen:
- DE-A1- 102020 114 316
- DE-A1- 2 010 582
- DE-A1- 2 541 616

## Beschreibung

Die Erfindung betrifft eine Anlage zur Versorgung von mindestens einer Schmierstelle einer Maschine mit Schmieröl, insbesondere einer Maschine zur Herstellung, Bearbeitung und Verarbeitung von Faserstoffbahnen, umfassend folgende, durch Leitungen hydraulisch zu einem Schmierölkreislauf verbundene Komponenten: einen Schmierölvorratsbehälter, mindestens eine Förderpumpe, einen, vorzugsweise mit Kühlwasser betreibbaren, Wärmetauscher zur Kühlung des umlaufenden Schmieröls und mindestens einer Schmierstelle, wobei die mindestens eine Schmierstelle wiederum mit dem Schmierölvorratsbehälter hydraulisch durch eine Leitung verbunden ist und der Schmierölkreislauf von dem Schmieröl in einer Durchflussrichtung durchströmt ist.

Die Erfindung betrifft auch ein Verfahren zur Versorgung von mindestens einer Schmierstelle einer Maschine mit Schmieröl.

Vorrichtungen dieser Art sind bekannt. Beispielsweise wird eine Zentralölschmierung in DE 10 2020 114 316 A1 oder DE 10 2015 224 384 A1 beschrieben. In Papiermaschinen wird beispielsweise eine Vielzahl von Walzenlagerungen durch eine Zentralölschmierung gemeinsam mit Schmieröl versorgt. Das Schmieröl erreicht im Betrieb der Maschine eine Betriebstemperatur, beispielsweise von 60°C und nimmt während des Betriebs Wasser aus der Umgebung auf, bis die Sättigungsgrenze für Wasser in Öl erreicht ist. Mit steigender Temperatur steigt auch die Sättigungsgrenze. Daraus ergibt sich jedoch das Problem des freiwerdenden Wassers, etwa bei Abkühlen des Öls während des Betriebs durch veränderte Betriebsbedingungen oder insbesondere nach dem Abstellen der Maschine Zustand des Stillstandes. Das dann freiwerdende Wasser kann zu Korrosion von Lagerkomponenten oder anderen Maschinenelementen und in der Folge Ausfällen der gesamten Produktionslinie führen. Um diesem Problem entgegenzuwirken, wird nach der Inbetriebnahme der Maschine der relative Wassergehalt von entnommenen Schmierölproben bei verschiedenen Temperaturen im Labor gemessen und Referenzkurven für den relativen Wassergehalt in Abhängigkeit von der Schmieröltemperatur und Ölsorte bestimmt. Mit diesen Referenzkurven wird ein Sensor kalibriert und während des Betriebs der Wassergehalt überwacht und überprüft ob für diesen Wassergehalt ein zulässiger Grenzwert erreicht wird, welcher bei Abkühlen des Öls mit hoher Wahrscheinlichkeit zu einer Bildung von freiem Wasser im Schmieröl führt. Da die Bestimmung der Referenzkurven nicht sehr genau ist und sich zudem die Eigenschaften des Schmieröls über der Zeit ändern, kann es trotzdem zum Freiwerden von absorbiertem Wasser im Schmieröl während des Stillstandes der Maschine und zu einer geringeren Betriebssicherheit führen. Wird das Öl getauscht, muss zur Kalibrierung des Sensors die teure und aufwändige Prozedur zur Bestimmung der Referenzkurven und zur Programmierung des Sensors wiederholt werden Die Sättigungsgrenze von Wasser kann für eine bestimmte Schmierölsorte bei einer Betriebstemperatur von 60°C z.B. bei 300 ppm und bei einer Stillstandtemperatur von 20°C bei 200 ppm liegen. Hat das Öl bei 20°C einen also Wassergehalt von 200 ppm erreicht so beträgt der relative Wassergehalt 100%. Das Schmieröl muss getauscht oder regeneriert werden, um Korrosionsschäden in den Schmierstellen zu vermeiden, obwohl im Betriebszustand bei 60°C die Sättigungsgrenze noch nicht erreicht ist.

Auch werden sehr oft aufwändige, wartungsintensive und teure Reinigungsvorrichtungen oder Trocknungseinrichtungen im Schmierölkreislauf vorgesehen, um das aufgenommene Wasser im Schmieröl aus dem Schmieröl zu entfernen oder zu entziehen. Dabei kommen beispielsweise Wasserabscheider zum Einsatz.

Auch kann das verunreinigte Schmieröl kostenintensiv gegen frisches Schmieröl ausgetauscht werden.

Weiter ist aus der DE 35 43 978 A1 eine Ölfiltrieranlage, insbesondere für ein Vakuumpumpe, bekannt, wobei ein Ölspülbehälter mit einem Inertgas durchspült wird.

Aus der DE 25 41 616 A1 und der US 2003/ 0 121 491 A1 sind Verbrennungsmotoren bekannt, wobei der Kurbelraum der Maschinen mit einem Schutzgas, vorzugsweise Stickstoff, mit einem geringen Überdruck gefüllt ist, was ein Eindringen von Luftsauerstoff verhindert.

Aus der KR 10 2003 044 705 A ist ein automatisches Reinigungssystem eines Ölfilters mit Stickstoff, wobei das Reinigungssystem im Rücklauf eines Schmierölsystems angeordnet ist, bekannt.

Die Aufgabe der Erfindung ist es daher eine Vorrichtung und ein Verfahren zur Vermeidung des Eindringens von feuchter Luft oder von Verunreinigungen in das Schmieröl anzugeben. Weiterhin besteht die Aufgabe darin, dass eine Korrosion in Schmierstellen einer Maschine vermieden wird, welche durch das Wasser im Öl verursacht werden kann. Durch die Vermeidung einer möglichen Korrosion kann die Betriebssicherheit bei geringem Kostenaufwand erhöht werden. Dabei ist es das primäre Ziel die ursächliche Verunreinigung durch den Eintritt von Wasser schon an den möglichen Eintrittsstellen zu verhindern.

Die Aufgabe wird durch Merkmale der unabhängigen Ansprüche gelöst. Es wird eine Anlage zur Versorgung von mindestens einer Schmierstelle einer Maschine mit Schmieröl, insbesondere einer Maschine zur Herstellung, Bearbeitung und Verarbeitung von Faserstoffbahnen vorgeschlagen, umfassend folgende, durch Leitungen hydraulisch zu einem Schmierölkreislauf verbundene Komponenten: einen Schmierölvorratsbehälter, mindestens eine Förderpumpe, einen, vorzugsweise mit Kühlwasser betreibbaren, Wärmetauscher zur Kühlung des umlaufenden Schmieröls und mindestens einer Schmierstelle, wobei die mindestens eine Schmierstelle wiederum mit dem Schmierölvorratsbehälter hydraulisch durch eine Leitung verbunden ist und der Schmierölkreislauf von dem Schmieröl in einer Durchflussrichtung durchströmt ist.

Die Erfindung zeichnet sich dadurch aus, dass die Schmierölrücklaufleitung eine Einleitungsstelle umfasst, welche derart ausgebildet ist, dass ein Schutzmedium, welches Luft ist, in die Schmierölrücklaufleitung eingeleitet werden kann.

Diese Lösung ermöglicht es in die mindestens eine Schmierölrücklaufleitung Luft als ein Schutzmedium einzuleiten und die Schmierölrücklaufleitung bis zur Schmierstelle mit einem Betriebsdruck bzw. einem Überdruck gegenüber dem Atmosphärendruck und/oder einem Volumenstrom zu beaufschlagen. Dadurch wird auch die mit der mindestens einen Schmierölrücklaufleitung verbundene Schmierstelle mit einem Betriebsdruck und/oder Volumenstrom beaufschlagt. Dadurch wird es ermöglicht an der mindestens einen Schmierstelle gegenüber der umgebenden Atmosphäre ein Eintreten oder Eindringen von Verunreinigungen wie beispielsweise feuchter Umgebungsluft, Dampf oder Fremdstoffen in das Schmieröl zu verhindern. Die Schmierstelle ist üblicherweise gegenüber der Umgebung mit mindestens einer Abdichtung, wie beispielsweise einer Labyrinth-Dichtung versehen, durch welche im Normalbetrieb ein Eintritt von Verunreinigungen stattfinden kann.

Durch die Einleitung eines Schutzmediums kann ein geringfügiger Überdruck bzw. Volumenstrom, vorzugsweise ein Luftstrom, an den Schmierstellen und deren Abdichtungen erzeugt werden, welcher ausreicht den Eintritt von Verunreinigungen zu reduzieren und/oder zu verhindern.

In einem praktischen Fall ist die Einleitungsstelle mit einem Schutzmedium-Strang verbunden und die Einleitungsstelle und/oder der Schutzmedium-Strang umfasst ein Schutzmedium-Regelventil.

Die mindestens eine Schmierstelle kann ein Wälzlager und/oder ein Gleitlager und/oder ein Zahnradgetriebe umfassen.

In einem praktischen Fall kann der Schmierölkreislauf mindestens eine Heizvorrichtung zum Aufheizen des Schmieröls und/oder eine Reinigungsvorrichtung zum Reinigen des Schmieröls aufweisen. Die Heizvorrichtung kann einen Wärmetauscher umfassen. Das Aufheizen des Schmieröls wird vorzugsweise beim Wiederanfahren der Maschine vom Stillstandzustand in den Betriebszustand durchgeführt.

Die Reinigungsvorrichtung ist dazu geeignet aufgenommenes Wasser aus dem Schmieröl und andere Verunreinigungen zu entfernen

In Durchflussrichtung gesehen kann es vorteilhaft sein, wenn die Schmierölrücklaufleitung einen Siphon vor dem Schmierölrücklauf in den Schmierölvorratsbehälter umfasst.

In einem praktischen Fall kann die Einleitungsstelle vor dem Siphon in der Durchflussrichtung des Schmieröls angeordnet sein.

Der Siphon bildet dabei einen Schutzmedium-Abschluss gegenüber dem Schmierölvorratsbehälter aus. Die Bauhöhe des Siphons oder die Stauhöhe des Siphons wirkt sich dabei begrenzend auf einen möglichen Betriebsdruck des in die Rücklaufleitungen eingeleiteten Schutzmediums (Luft) aus. Die Schenkellänge des Siphons ist somit den gewünschten Betriebsdrücken des einzuleitenden Schutzmediums anzupassen.

In einer vorteilhaften Weiterbildung kann der Schmierölkreislauf eine gegenüber der umgebenden Atmosphäre offener Schmierölkreiskauf sein.

In einem praktischen Fall kann die Schmierölrücklaufleitung von der Schmierstelle bis zu dem Schmierölvorratsbehälter, vorzugsweise bis zu dem Siphon, ein teilweise gegenüber der umgebenden Atmosphäre offener Schmierölkreislauf sein. Diese bedeutet, dass die Schmierölrücklaufleitung von Siphon bis zur Schmierstelle nur zu einem Teil, vorzugsweise bis zu maximal 75%, insbesondere 50%, mit Schmieröl gefüllt ist und der restliche Anteil von der Umgebungsluft eingenommen wird. Dies ermöglicht vorteilhafterweise eine einfache Beaufschlagung der Schmierölrücklaufleitung mit einem Schutzmedium, vorzugsweise Luft. Durch die Einleitung von einem Schutzmedium, beispielsweise unter Druck stehende Luft - Druckluft -, in die Schmierölrücklaufleitung wird gegenüber der Umgebung ein Überdruck erzeugt, wobei schon geringe Überdrücke ausreichen um auch in der Maschine zur Herstellung der Faserstoffbahn höher (statischer Druck) gelegene Schmierstellen mit einem Überdruck gegenüber der Umgebung zu beaufschlagen.

In einer vorteilhaften Weiterbildung kann die Schmierölrücklaufleitung ein Rückschlagventil umfassen, welches derart angeordnet ist, so dass ein Entweichen des Schutzmediums verhindert und gleichzeitig der Schmierölrücklauf unterstützt wird.

Das Rückschlagventil ermöglicht es die Schmierölrücklaufleitung so auszuführen, dass ein Betriebsdruck nicht von innen zur Umgebung entweichen kann, jedoch ein ungewollter Unterdruck, beispielsweise durch rücklaufendes Öl, in der Schmierölrücklaufleitung verhindert wird.

In einem praktischen Fall kann die Schmierölrücklaufleitung mindestens eine verschlossene Belüftungsvorrichtung umfassen. Die Einleitung des Schutzmediums macht es erforderlich, bei Modernisierungen von existierenden Anlagen, eventuelle vorhandene Belüftungsvorrichtungen gegenüber der Umgebung zu verschließen. Dies hat auch weiterhin den Vorteil ein Eindringen von Verunreinigungen über die Belüftungsvorrichtungen zu verhindern.

Die Aufgabe wird auch durch ein Verfahren zum Betreiben einer Anlage zur Versorgung von mindestens einer Schmierstelle einer Maschine mit Schmieröl, insbesondere einer Maschine zur Herstellung, Bearbeitung und Verarbeitung von Faserstoffbahnen, gelöst. Die Anlage umfasst folgende, durch Leitungen zu einem Schmierölkreislauf verbundene Komponenten: einen Ölvorratsbehälter, mindestens eine Förderpumpe, einen Wärmetauscher zur Kühlung des umlaufenden Schmieröls und mindestens einer Schmierstelle, wobei die mindestens eine Schmierstelle wiederum mit dem Ölvorratsbehälter hydraulisch verbunden wird und wobei der Schmierölkreislauf von dem Schmieröl in einer Durchflussrichtung durchströmt wird.

Erfindungsgemäß ist vorgesehen, dass ein Schutzmedium-Strang und eine Einleitungsstelle in der Schmierölrücklaufleitung vorgesehen ist und dass dadurch die Schmierölrücklaufleitung mit ein Schutzmedium, welches Luft ist, mit einem Betriebsdruck oder Überdruck gegenüber dem Atmosphärendruck und/oder einem Volumenstrom eingeleitet und geregelt wird.

In einigen praktischen Fällen erweist sich die Einstellung eines vorteilhaften Betriebsdruckes zur Erreichung der Schutzwirkung gegen feuchte Luft, Dampf und/oder Verunreinigungen als schwierig. Dies ist oft in komplexen und verzweigten Schmierölkreisläufen der Fall und ist bedingt durch die schwierig ermittelbaren Druckverluste in dem Rohrleitungssystem.

Als alternative Ausführungsform wird daher kein fester Betriebsdruck an der Einleitungsstelle eingestellt, sondern stattdessen ein definierter Volumenstrom des Schutzmediums oder Schutzmediums, vorzugsweise von Luft, eingeleitet und eingestellt. Dieser Volumenstrom wird an der Einleitungsstelle überwacht und geregelt. Damit wird erreicht, dass es sicher zu einem Einströmen des Schutzmediums in die Rücklaufleitungen des Schmierölkreislaufs kommt und somit eine dem Eindringen von feuchter Luft, Dampf oder anderen Verunreinigungen entgegengerichtete Strömung vorhanden ist

Vorteilhafterweise wird das Schutzmedium mit einem Betriebsdruck von 0,01 bar bis 0,1 bar, vorzugsweise von 0,02 bar bis 0,05 bar, über dem Umgebungsdruck eingeleitet und geregelt. Schon geringe Überdrücke gegenüber dem Umgebungsdruck ermöglichen eine Verhinderung von Eindringen von Verunreinigungen in die mindestens eine Schmierstelle.

Vorteilhafterweise wird das Schutzmedium mit einem Volumenstrom in Abhängigkeit des einzustellenden Betriebsdruckes, der Dimensionen des Schmierölkreislaufs und den zu versorgenden Schmierstellen eingeleitet und geregelt.

In einem möglichen praktischen Fall wird das Schutzmedium mit einem Betriebsdruck und/oder mit einem Volumenstrom nach Erreichen einer Schmieröltemperatur von 40°C bis 80°C, vorzugsweise von 50°C bis 65°C, eingeleitet und geregelt.

In einem möglichen praktischen Fall wird das Schutzmedium mit einem Betriebsdruck von 0 bar und/oder mit einem Volumenstrom von 0 m³/s, vorzugsweise also druck- und/oder strömungslos, während eines Anfahrvorgangs und/oder eines Stillstandes der Maschine eingeleitet und geregelt.

Weitere Merkmale und Vorteile der Erfindung ergeben sich aus der nachfolgenden Beschreibung eines bevorzugten Ausführungsbeispiels unter Bezugnahme auf die Zeichnung.

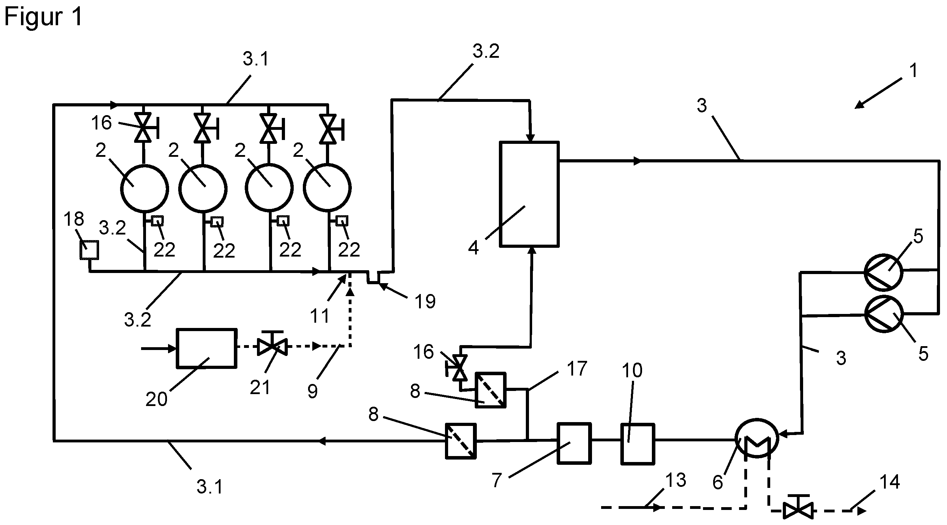

Die einzige Figur 1 zeigt ein Fließschema einer Anlage 1 zur Versorgung von mindestens einer Schmierstelle 2 einer Maschine mit Schmieröl. In diesem Beispiel handelt es sich um eine Maschine zur Herstellung, Bearbeitung und Verarbeitung von Faserstoffbahnen. Bei solchen Papiermaschinen versorgt die Anlage 1 eine Vielzahl von Lagerstellen von Walzen, von denen hier der Einfachheit halber nur vier dargestellt sind, durch eine Zentralölschmierungsanlage mit Schmieröl. Diese Schmierstellen 2 sind zum Teil extremen Temperaturen und hoher Luftfeuchtigkeit ausgesetzt. Insbesondere innerhalb der Trockenpartie herrschen hohe Temperaturen bei hoher Luftfeuchtigkeit und auch dampfhaltiger Atmosphäre. Die Feuchtigkeit hat hier die Möglichkeit sich in dem Schmieröl bis zum Erreichen einer Sättigungsgrenze durch Kondensationsprozesse zu akkumulieren. Da die Sättigungsgrenze temperaturabhängig ist kann es während des Betriebs wie auch insbesondere beim Abstellen der Maschine durch Abkühlen des Schmieröls zum Freiwerden des Wassers und somit zu Korrosion in den Lagerstellen führen. Auch können durch die Schmierstellen 2 weitere Verunreinigungen in das Schmieröl eintreten. Durch die Ausführung der Anlage 1 nach Figur 1 kann dieses Problem behoben werden und ein Eintreten oder eine Verunreinigung des Schmieröls vermieden werden.

Die Anlage 1 umfasst die folgenden durch Leitungen hydraulisch zu einem Schmierölkreislauf 3 verbundene Komponenten: einen Schmierölvorratsbehälter 4, mindestens eine Förderpumpe 5, wobei in diesem Beispiel zwei Förderpumpen 5 zur Erzeugung einer Schmierölströmung in Durchflussrichtung des Schmierölkreislaufes 3 vorgesehen sind, einen mit Kühlwasser betreibbaren, Wärmetauscher 6 zur Kühlung des umlaufenden Schmieröls im Betrieb der Maschine und -in diesem Beispiel- vier Schmierstellen 2. Diese sind wiederum hydraulisch durch Metallleitungen oder Schläuche wiederum mit dem Schmierölvorratsbehälter 4 verbunden. Vorteilhafterweise werden die Schmierstellen 2 mit mindestens einer Schmierölzulaufleitung 3.1 versorgt und der Schmierölzulauf an den einzelnen Schmierstellen 2 über mindestens ein entsprechendes Regelventil 16 gesteuert.

Ausgehend von der mindestens einen Schmierstelle 2 umfasst der Schmierölkreislauf 3 je Schmierstelle 2 mindestens eine Schmierölrücklaufleitung 3.2. Vorteilhafterweise werden in diesem Beispiel vier von den Schmierstellen 2 ausgehenden Schmierölrücklaufleitungen 3.2 nach einer kurzen Leitungsstrecke in eine gemeinsamen Schmierölrücklaufleitung 3.2 eingeleitet.

Die Schmierölrücklaufleitung 3.2 führt wieder zurück in den Schmierölvorratsbehälter 4.

Weiterhin umfasst die Schmierölrücklaufleitung 3.2 eine Einleitungsstelle 11 durch welche ein Schutzmedium, vorzugsweise Luft, in die Schmierölrücklaufleitung 3.2 eingeleitet werden kann. Das Schutzmedium kann von einem Drucksystem der Maschine zur Herstellung einer Faserstoffbahn bereitgestellt bzw. durch separate Kompressoren bereitgestellt werden. Alternativ kann das Schutzmedium in einem Schutzmedium-Vorratsbehälter 20 unter einem Überdruck bevorratet werden. Weiterhin ist die Schmierölrücklaufleitung 3.2 über die Einleitungsstelle 11 und einen Schutzmedium-Strang 9 mit dem Schutzmedium-Vorratsbehälter 20 und/oder einem Kompressor und/oder einem Drucksystem der Maschine zur Herstellung einer Faserstoffbahn verbunden. Der Schutzmedium-Strang 9 umfasst auch eine Steuer- oder Regeleinheit, welche über ein Schutzmedium-Regelventil 21 einen gewünschten Betriebsdruck bzw. Überdruck gegenüber dem umgebenden Atmosphärendruck und/oder einen Volumenstrom bzw. Durchfluss regeln kann. Das Schutzmedium-Regelventil 21 kann dabei alternativ auch als Mess- und Regeleinheit für einen Druck oder Durchfluss ausgeführt werden.

An der Einleitungsstelle 11 wird das Schutzmedium in die Schmierölrücklaufleitung 3.2 mit einem Betriebsdruck oder Überdruck gegenüber dem Atmosphärendruck eingeleitet. Vorteilhafterweise befindet sich die Einleitungsstelle 11 zwischen der mindestens einen Schmierstelle 2 und einem in der Schmierölrücklaufleitung 3.2 umfassten Siphon 19. Weiter vorzugsweise wird die Einleitungsstelle 11, mit der die Einleitung des Schutzmediums erfolgt, in Durchflussrichtung unmittelbar vor dem Siphon 19 angeordnet.

Beispielsweise ist der Schmierölkreislauf 3 als ein teilweises offenes System gegenüber der Umgebung ausgeführt, dies bedeutet, dass die Schmierölrücklaufleitung 3.2, ausgehend von der Schmierstelle 2 bis zu dem Schmierölvorratsbehälter 4, vorzugsweise bis zu einem in Durchflussrichtung vor dem Schmierölvorratsbehälter 4 umfassten Siphon 19, nur zum Teil mit Öl gefüllt.

Der in der Schmierölrücklaufleitung 3.2 umfasste Siphon 19 ist derart in Durchflussrichtung des Schmieröls vor dem Schmierölvorratsbehälter 4 angeordnet, so dass der Siphon einen Abschluss gegenüber dem eingeleiteten Schutzmedium bildet und den Schmierölvorratsbehälter 4 nicht mit einem Überdruck oder Betriebsdruck beaufschlagt. Die Bauhöhe des Siphons 19 oder die Stauhöhe des Siphons 19 wirkt sich dabei begrenzend auf einen mögliche Betriebsdruck des Schutzmedium-Strangs 9 aus. Die Schenkellänge des Siphons 19 ist somit den gewünschten Betriebsdrücken anzupassen
Weiterhin kann sich durch das offene System in der mindestens einen Schmierölrücklaufleitung 3.2 keine statische Schmierölsäule mit entsprechendem statischem Druck ausbilden, gegenüber dem der Überdruck des Schutzmediums, welcher als ein Betriebsdruck eingestellt wird, wirken muss. Das Schutzmedium muss daher nur gegenüber der in den Schmierölrücklaufleitungen 3.2 enthaltenden Umgebungsdruck der Luft wirken.

Die Schmierstellen 2 sind beispielsweise Wälzlager, Gleitlager und/oder Zahnradgetriebe für den Antrieb und/oder die Lagerung von in der Maschine zur Herstellung einer Faserstoffbahn im Einsatz befindlichen Walzen oder anderen sich drehenden Komponenten. Die so ausgeführten Schmierstellen 2 sind mit Abdichtungen, beispielsweise mit LabyrinthDichtungen, gegenüber der Umgebung oder der umgebenden Atmosphäre abgedichtet. Diese Abdichtungen sind üblicherweise nie zu 100% dicht.

Die Figur 1 zeigt weiterhin eine Ausführung, in der ein Rückschlagventil 18 in der Schmierölrücklaufleitung 3.2 umfasst ist. Dieses Rückschlagventil 18 ist derart in der Schmierölrücklaufleitung 3.2 angeordnet, dass ein eingestellter Betriebsdruck nicht von innen zur Umgebung entweichen kann, jedoch ein ungewollter Unterdruck in der Schmierölrücklaufleitung 3.2 verhindert wird.

In diesem Beispiel ist weiterhin mindestens eine Belüftungsvorrichtung 22 je Schmierstelle 2 dargestellt. Diese ist in der mindestens einen Schmierölrücklaufleitung 3.2 umfasst. Weiterhin ist diese Belüftungsvorrichtung 22 üblicherweise bei existierenden Maschinen zur Herstellung einer Faserstoffbahn umfasst, um dadurch einen möglichen Unterdruck durch das fließende Schmieröl in den Schmierölrücklaufleitungen 3.2 zu vermeiden. Bei Modernisierungen und Upgrades durch die vorliegende Erfindung sind in diesem Fall die Belüftungsvorrichtungen 22 durch entsprechende Mittel zu entfernen oder gegenüber der Umgebung zu verschließen, dies hat den zusätzlichen Vorteil, dass durch diese offene Stelle keine weiteren Verunreinigungen in das System eingetragen werden.

Der Wärmetauscher 6 ist mit einem Kühlmittelzulauf 13 und einem Kühlmittelrücklauf 14 verbunden. Als Kühlmittel wird, wie schon erwähnt, Wasser verwendet. In Durchflussrichtung nach dem Wärmetauscher 6 ist eine Heizungsvorrichtung 7, welche auch einen Wärmetauscher umfassen kann, und danach ein Abzweig zu einer Bypass-Leitung 17 zum schnellen Aufheizen des Schmieröls auf Betriebstemperatur vorgesehen. Die Bypass-Leitung 17 mündet nach einem optional einsetzbaren Filter 8 in den Schmierölvorratsbehälter 4. Mit der Bypass-Leitung 17 ist ein Aufheizbetrieb der Anlage 1 mit einem kleineren Schmierölkreislauf 3 umsetzbar. Zur Erreichung der gewünschten Temperatur umfasst die Bypass-Leitung 17 auch eine Steuer- oder Regeleinheit, welche über ein Regelventil 16 die Aufheizung regeln kann. Optional kann in einer alternativen Ausführungsform im Schmierölkreislauf 3 eine Reinigungsvorrichtung 10 zur Entfernung von Verunreinigung wie beispielsweise dem aufgenommenen Wasser oder anderen Fremdstoffen umfasst sein. Dadurch kann zusätzlich die Bildung von freiem Wasser in den Schmierstellen 2 und somit Korrosion vermieden werden. Zur weiteren Entfernung von Schmutzpartikel im Schmieröl ist im Schmierölkreislauf 3 ein weiterer Filter 8 vorgesehen.

### Bezugszeichenliste

- 1: Anlage
- 2: Schmierstelle
- 3: Schmierölkreislauf
- 3.1: Schmierölzulauf
- 3.2: Schmierölrücklauf
- 4: Schmierölvorratsbehälter
- 5: Förderpumpe
- 6: Wärmetauscher
- 7: Heizungsvorrichtung
- 8: Filter
- 9: Schutzmedium-Strang
- 10: Reinigungsvorrichtung
- 11: Einleitungsstelle
- 13: Kühlmittelzulauf
- 14: Kühlmittelrücklauf
- 16: Regelventil
- 17: Bypass-Leitung
- 18: Rückschlagventil
- 19: Siphon
- 20: Schutzmedium-Vorratsbehälter
- 21: Schutzmedium-Regelventil
- 22: Belüftungsvorrichtung

## Patentansprüche

1. Anlage (1) zur Versorgung von mindestens einer Schmierstelle (2) einer Maschine mit Schmieröl, insbesondere einer Maschine zur Herstellung, Bearbeitung und Verarbeitung von Faserstoffbahnen, umfassend folgende, durch Leitungen hydraulisch zu einem Schmierölkreislauf (3, 3.1, 3.2) verbundene Komponenten: einen Schmierölvorratsbehälter (4), mindestens eine Förderpumpe (5), einen, vorzugsweise mit Kühlwasser betreibbaren, Wärmetauscher (6) zur Kühlung des umlaufenden Schmieröls und mindestens einer Schmierstelle (2), wobei die mindestens eine Schmierstelle (2) wiederum mit dem Schmierölvorratsbehälter (4) hydraulisch durch eine Schmierölzulaufleitung (3.1) und einer Schmierölrücklaufleitung (3.2), verbunden ist und der Schmierölkreislauf (3, 3.1, 3.2) von dem Schmieröl in einer Durchflussrichtung durchströmt ist,
**dadurch gekennzeichnet, dass**
die Schmierölrücklaufleitung (3.2) eine Einleitungsstelle (11) umfasst, welche derart ausgebildet ist, dass ein Schutzmedium, welches Luft ist, in die Schmierölrücklaufleitung (3.2) eingeleitet werden kann.

2. Anlage nach Anspruch 1,
**dadurch gekennzeichnet, dass**
die Einleitungsstelle (11) mit einem Schutzmedium-Strang (9) verbunden ist und die Einleitungsstelle (11) und/oder der Schutzmedium-Strang (9) ein Schutzmedium-Regelventil (21) umfasst.

3. Anlage nach Anspruch 1 oder 2,
**dadurch gekennzeichnet, dass**
der Schmierölkreislauf (3) mindestens eine Heizvorrichtung (7) zum Aufheizen des Schmieröls und/oder mindestens eine Reinigungsvorrichtung (10) zum Reinigen des Schmieröls aufweist.

4. Anlage nach einem der vorhergehenden Ansprüche,
**dadurch gekennzeichnet, dass**
die Schmierölrücklaufleitung (3.2) einen Siphon (19) vor dem Schmierölrücklauf in den Schmierölvorratsbehälter (4) umfasst.

5. Anlage nach Anspruch 4,
**dadurch gekennzeichnet, dass**
die Einleitungsstelle (11) vor dem Siphon (19) in der Durchflussrichtung des Schmieröls angeordnet ist.

6. Anlage nach einem der vorhergehenden Ansprüche,
**dadurch gekennzeichnet, dass**
der Schmierölkreislauf (3) eine gegenüber der umgebenden Atmosphäre offener Schmierölkreislauf (3) ist.

7. Anlage nach einem der Ansprüche 1 bis 5,
**dadurch gekennzeichnet, dass**
die Schmierölrücklaufleitung (3.2) von der Schmierstelle (2) bis zu dem Schmierölvorratsbehälter (4), vorzugsweise bis zu dem Siphon (19), ein teilweise gegenüber der umgebenden Atmosphäre offener Schmierölkreislauf (3) ist.

8. Anlage nach einem der vorhergehenden Ansprüche,
**dadurch gekennzeichnet, dass**
die Schmierölrücklaufleitung (3.2) ein Rückschlagventil (18) umfasst, welches derart angeordnet ist, so dass ein Entweichen des Schutzmediums verhindert und der Schmierölrücklauf unterstützt wird.

9. Anlage nach einem der vorhergehenden Ansprüche,
**dadurch gekennzeichnet, dass**
die Schmierölrücklaufleitung (3.2) mindestens eine Belüftungsvorrichtung (22) umfasst, und dass die mindestens eine Belüftungsvorrichtung (22) verschlossen ist.

10. Verfahren zum Betreiben einer Anlage zur Versorgung von mindestens einer Schmierstelle (2) einer Maschine mit Schmieröl, insbesondere einer Maschine zur Herstellung, Bearbeitung und Verarbeitung von Faserstoffbahnen, wobei die Anlage folgende, durch Leitungen hydraulisch zu einem Schmierölkreislauf (3) verbundene Komponenten umfasst: einen Schmierölvorratsbehälter (4), mindestens eine Förderpumpe (5), einen Wärmetauscher (6) zur Kühlung des umlaufenden Schmieröls und mindestens einer Schmierstelle (2), wobei die mindestens eine Schmierstelle (2) wiederum mit dem Schmierölvorratsbehälter (4) hydraulisch verbunden wird und wobei der Schmierölkreislauf (3, 3.1, 3.2) von dem Schmieröl in einer Durchflussrichtung durchströmt wird,
**dadurch gekennzeichnet, dass**
in die Schmierölrücklaufleitung (3.2) ein Schutzmedium, welches Luft ist, über eine in der Schmierölrücklaufleitung (3.2) umfasste Einleitungsstelle (11) eingeleitet wird und dass das Schutzmedium mit einem Betriebsdruck gegenüber dem Atmosphärendruck und/oder mit einem Volumenstrom eingeleitet und geregelt wird.

11. Verfahren nach Anspruch 10,
**dadurch gekennzeichnet, dass**
das Schutzmedium mit einem Betriebsdruck von 0,01 bar bis 0,1 bar, vorzugsweise von 0,02 bar bis 0,05 bar, über dem Atmosphärendruck eingeleitet und geregelt wird.

12. Verfahren nach Anspruch 10 oder 11,
**dadurch gekennzeichnet, dass**
das Schutzmedium mit einem Betriebsdruck und/oder mit einem Volumenstrom erst nach Erreichen einer Schmieröltemperatur von 40°C bis 80°C, vorzugsweise von 50°C bis 65°C, eingeleitet und geregelt wird.

## Claims

1. System (1) for supplying at least one lubrication point (2) of a machine with lubricating oil, in particular a machine for producing, machining and processing fibrous webs, comprising the following components, which are connected hydraulically by lines to form a lubricating oil circuit (3, 3.1, 3.2): a lubricating oil storage container (4), at least one feed pump (5), a heat exchanger (6), which can preferably be operated with cooling water, to cool the circulating lubricating oil, and at least one lubrication point (2), wherein the at least one lubrication point (2) is again connected hydraulically by a lubricating oil feed line (3.1) and a lubricating oil return line (3.2) to the lubricating oil storage container (4), and the lubricating oil flows through the lubricating oil circuit (3, 3.1, 3.2) in a flow direction,
**characterized in that**
the lubricating oil return line (3.2) comprises an introduction point (11), which is designed such that a protective medium, which is air, can be introduced into the lubricating oil return line (3.2).

2. System according to Claim 1,
**characterized in that**
the introduction point (11) is connected to a protective medium tract (9), and the introduction point (11) and/or the protective medium tract (9) comprises a protective medium control valve (21).

3. System according to Claim 1 or 2,
**characterized in that**
the lubricating oil circuit (3) has at least one heating device (7) for heating the lubricating oil and/or at least one cleaning device (10) for cleaning the lubricating oil.

4. System according to any one of the preceding claims,
**characterized in that**
the lubricating oil return line (3.2) comprises a siphon (19) upstream of the lubricating oil return into the lubricating oil storage container (4).

5. System according to Claim 4,
**characterized in that**
the introduction point (11) is arranged upstream of the siphon (19) in the flow direction of the lubricating oil.

6. System according to any one of the preceding claims,
**characterized in that**
the lubricating oil circuit (3) is a lubricating oil circuit (3) that is open to the ambient atmosphere.

7. System according to any one of Claims 1 to 5,
**characterized in that**
the lubricating oil return line (3.2) is a lubricating oil circuit (3) that is partially open to the ambient atmosphere from the lubrication point (2) to the lubricating oil storage container (4), preferably to the siphon (19).

8. System according to any one of the preceding claims,
**characterized in that**
the lubricating oil return line (3.2) comprises a nonreturn valve (18), which is arranged such that the protective medium is prevented from escaping and the lubricating oil return is supported.

9. System according to any one of the preceding claims,
**characterized in that**
the lubricating oil return line (3.2) comprises at least one ventilation device (22), and **in that** the at least one ventilation device (22) is closed.

10. Method for operating a system for supplying at least one lubrication point (2) of a machine with lubricating oil, in particular a machine for producing, machining and processing fibrous webs, wherein the system comprises the following components, which are connected hydraulically by lines to form a lubricating oil circuit (3): a lubricating oil storage container (4), at least one feed pump (5), a heat exchanger (6) to cool the circulating lubricating oil, and at least one lubrication point (2), wherein the at least one lubrication point (2) is again connected hydraulically to the lubricating oil storage container (4), and wherein the lubricating oil flows through the lubricating oil circuit (3, 3.1, 3.2) in a flow direction,
**characterized in that**
a protective medium, which is air, is introduced into the lubricating oil return line (3.2) via an introduction point (11) included in the lubricating oil return line (3.2), and **in that** the protective medium is introduced and controlled at an operating pressure relative to atmospheric pressure and/or a volumetric flow.

11. Method according to Claim 10,
**characterized in that**
the protective medium is introduced and controlled at an operating pressure of 0.01 bar to 0.1 bar, preferably of 0.02 bar to 0.05 bar, above atmospheric pressure.

12. Method according to Claim 10 or 11,
**characterized in that**
the protective medium is introduced and controlled at an operating pressure and/or volumetric flow only after a lubricating oil temperature of 40°C to 80°C, preferably of 50°C to 65°C, has been reached.

## Revendications

1. Installation (1) destinée à alimenter au moins un site de lubrification (2) d'une machine en huile lubrifiante, en particulier d'une machine pour la fabrication, le traitement et la transformation de bandes de substance fibreuse, comprenant les composants suivants, reliés hydrauliquement par des conduites en un circuit (3, 3.1, 3.2) d'huile lubrifiante : un réservoir (4) d'huile lubrifiante, au moins une pompe d'alimentation (5), un échangeur de chaleur (6) fonctionnant de préférence avec de l'eau de refroidissement pour le refroidissement de l'huile lubrifiante en circulation et au moins un site de lubrification (2), ledit au moins un site de lubrification (2) étant relié à son tour hydrauliquement au réservoir (4) d'huile lubrifiante par une conduite d'amenée (3.1) d'huile lubrifiante et une conduite de retour (3.2) d'huile lubrifiante et le circuit (3, 3.1, 3.2) d'huile lubrifiante étant traversé par l'huile lubrifiante dans un sens d'écoulement,
**caractérisée en ce que**
la conduite de retour (3.2) d'huile lubrifiante comprend un site d'introduction (11) qui est réalisé de telle sorte qu'un agent de protection, qui est de l'air, peut être introduit dans la conduite de retour (3.2) d'huile lubrifiante.

2. Installation selon la revendication 1,
**caractérisée en ce que**
le site d'introduction (11) est relié à une gaine (9) à agent de protection et le site d'introduction (11) et/ou la gaine (9) à agent de protection comprend/comprennent une vanne de régulation (21) pour l'agent de protection.

3. Installation selon la revendication 1 ou 2,
**caractérisée en ce que**
le circuit (3) d'huile lubrifiante présente au moins un dispositif de chauffage (7) destiné à chauffer l'huile lubrifiante et/ou au moins un dispositif de purification (10) destiné à purifier l'huile lubrifiante.

4. Installation selon l'une des revendications précédentes,
**caractérisée en ce que**
la conduite de retour (3.2) d'huile lubrifiante comprend un siphon (19) en amont du retour d'huile lubrifiante dans le réservoir (4) d'huile lubrifiante.

5. Installation selon la revendication 4,
**caractérisée en ce que**
le site introduction (11) est agencé en amont du siphon (19) dans le sens d'écoulement de l'huile lubrifiante.

6. Installation selon l'une des revendications précédentes,
**caractérisée en ce que**
le circuit (3) d'huile lubrifiante est un circuit (3) d'huile lubrifiante ouvert par rapport à l'atmosphère environnante.

7. Installation selon l'une des revendications 1 à 5,
**caractérisée en ce que**
la conduite de retour (3.2) d'huile lubrifiante est un circuit (3) d'huile lubrifiante partiellement ouvert par rapport à l'atmosphère environnante à partir du site de lubrification (2) jusqu'au réservoir (4) d'huile lubrifiante, de préférence jusqu'au siphon (19).

8. Installation selon l'une des revendications précédentes,
**caractérisée en ce que**
la conduite de retour (3.2) d'huile lubrifiante comprend un clapet antiretour (18) qui est agencé de telle sorte qu'un échappement de l'agent de protection est empêché et que le retour d'huile lubrifiante est soutenu.

9. Installation selon l'une des revendications précédentes,
**caractérisée en ce que**
la conduite de retour (3.2) d'huile lubrifiante comprend au moins un dispositif de mise à l'air (22) et **en ce que** ledit au moins un dispositif de mise à l'air (22) est fermé.

10. Procédé de fonctionnement d'une installation destinée à alimenter au moins un site de lubrification (2) d'une machine en huile lubrifiante, en particulier d'une machine pour la fabrication, le traitement et la transformation de bandes de substance fibreuse, l'installation comprenant les composants suivants, reliés hydrauliquement par des conduites en un circuit (3) d'huile lubrifiante : un réservoir (4) d'huile lubrifiante, au moins une pompe d'alimentation (5), un échangeur de chaleur (6) pour le refroidissement de l'huile lubrifiante en circulation et au moins un site de lubrification (2), ledit au moins un site de lubrification (2) étant relié à son tour hydrauliquement au réservoir (4) d'huile lubrifiante et le circuit (3, 3.1, 3.2) d'huile lubrifiante étant traversé par l'huile lubrifiante dans un sens d'écoulement,
**caractérisé en ce que**
un agent de protection, qui est de l'air, est introduit dans la conduite de retour (3.2) d'huile lubrifiante par l'intermédiaire d'un site d'introduction (11) compris dans la conduite de retour (3.2) d'huile lubrifiante et **en ce que** l'agent de protection est introduit et régulé à une pression de fonctionnement par rapport à la pression atmosphérique et/ou à un flux volumétrique.

11. Procédé selon la revendication 10,
**caractérisé en ce que**
l'agent de protection est introduit et régulé à une pression de fonctionnement de 0,01 bar à 0,1 bar, de préférence de 0,02 bar à 0,05 bar, au-dessus de la pression atmosphérique.

12. Procédé selon la revendication 10 ou 11,
**caractérisé en ce que**
l'agent de protection est introduit et régulier à une pression de fonctionnement et/ou à un flux volumétrique seulement après avoir atteint une température de l'huile lubrifiante de 40°C à 80°C, de préférence de 50°C à 65°C.
